# EUROPEAN PATENT APPLICATION

(11) **EP 4 538 235 A1**
(43) Date of publication of application: **16.04.2025**
(21) Application number: 23819483.1
(22) Date of filing: 06.04.2023
(51) Int. Cl.: C01G 31/00, H01M 4/485

(54) **VANADIUM OXIDE AND BATTERY USING SAME**

(30) Priority: 06.06.2022 JP 2022091589
(71) Applicant: Panasonic Intellectual Property Management Co., Ltd., Osaka-shi, Osaka 540-6207 (JP)
(72) Inventor: TANAKA, Yoshiaki, Kadoma-shi, Osaka 571-0057 (JP); MIZUNO, Keita, Kadoma-shi, Osaka 571-0057 (JP); SAKAI, Akihiro, Kadoma-shi, Osaka 571-0057 (JP)
(74) Representative: Eisenführ Speiser
(86) International application number: PCT/JP2023/014290
(87) International publication number: WO 2023/238496

(57) **Abstract**

A vanadium oxide of the present disclosure is represented by a composition formula (1): Li_{3+x+α}V₁₋ₓMₓO_{4+α/2}. In the composition formula (1), 0.03<α<1.0 and 0≤x<1.0 are satisfied, and M is at least one selected from the group consisting of tetravalent metal elements. A battery 1000 of the present disclosure includes a positive electrode 201, a negative electrode 203, and an electrolyte layer 202 disposed between the positive electrode 201 and the negative electrode 203. The negative electrode 203 includes the vanadium oxide of the present disclosure.

## Description

### TECHNICAL FIELD

The present disclosure relates to a vanadium oxide and a battery using the same.

### BACKGROUND ART

Patent Literature 1 discloses a nonaqueous secondary battery in which Li₃VO₄ is used as a negative electrode active material.

Patent Literature 2 discloses a co-fired all-solid-state battery in which a negative electrode active material represented by (Li_{[3-ax+(5-b)y]}Aₓ)(V_{1-y}B_{y})O₄ is used. A represents at least one element selected from the group consisting of Mg, Al, Ga, and Zn. B represents at least one element selected from the group consisting of Zn, Al, Ga, Si, Ge, P, and Ti. x and y satisfy 0≤x≤1.0 and 0≤y≤0.6, respectively. a represents an average valence of A, and b represents an average valence of B.

### CITATION LIST

### Patent Literature

Patent Literature 1: JP2008-77847A
Patent Literature 2: WO2019/044902

### SUMMARY OF INVENTION

### Technical Problem

The present disclosure provides a novel vanadium oxide that can be used as a battery material.

### Solution to Problem

A vanadium oxide of the present disclosure is represented by a composition formula (1): Li_{3+x+α}V₁₋ₓMₓO_{4+α/2}, and
in the composition formula (1),
0.03<α<1.0 and 0≤x<1.0 are satisfied, and
M is at least one selected from the group consisting of tetravalent metal elements.

### Advantageous Effects of Invention

The present disclosure provides a novel vanadium oxide that can be used as a battery material.

### BRIEF DESCRIPTION OF THE DRAWINGS

FIG. 1 illustrates a cross-sectional view of a battery 1000 according to a second embodiment.
FIG. 2 illustrates a cross-sectional view of an electrode material 1100 according to the second embodiment.
FIG. 3 shows a graph representing initial discharge characteristics of a battery of Example 1.

### DESCRIPTION OF EMBODIMENTS

### (Outline of one aspect of the present disclosure)

A vanadium oxide according to a first aspect of the present disclosure is represented by a composition formula (1): Li_{3+x+α}V₁₋ₓMₓO_{4+α/2}, and
in the composition formula (1),
0.03<α<1.0 and 0≤x<1.0 are satisfied, and
M is at least one selected from the group consisting of tetravalent metal elements.

The vanadium oxide according to the first aspect is a novel substance that can be used as a battery material. The vanadium oxide according to the first aspect can be used as, for example, a negative electrode active material. The vanadium oxide according to the first aspect is suitable for improving, for example, charge and discharge characteristics of a battery, and is suitable for improving, for example, a battery capacity.

According to a second aspect of the present disclosure, for example, in the vanadium oxide according to the first aspect, 0<x<1.0 may be satisfied in the composition formula (1).

The vanadium oxide according to second aspect is more suitable for improving a battery capacity.

According to a third aspect of the present disclosure, for example, in the vanadium oxide according to the second aspect, 0<x≤0.1 may be satisfied in the composition formula (1).

The vanadium oxide according to the third aspect is more suitable for improving a battery capacity.

According to a fourth aspect of the present disclosure, for example, in the vanadium oxide according to any one of the first to the third aspects, M may include Ti in the composition formula (1).

The vanadium oxide according to the fourth aspect is more suitable for improving a battery capacity.

According to a fifth aspect of the present disclosure, for example, in the vanadium oxide according to any one of the first to the fourth aspects, 0.04≤α≤0.95 may be satisfied in the composition formula (1).

The vanadium oxide according to the fifth aspect is more suitable for improving a battery capacity.

According to a sixth aspect of the present disclosure, for example, in the vanadium oxide according to the fifth aspect, 0.06≤α≤0.93 may be satisfied in the composition formula (1).

The vanadium oxide according to the sixth aspect is more suitable for improving a battery capacity.

According to a seventh aspect of the present disclosure, for example, in the vanadium oxide according to the sixth aspect, 0.1≤α≤0.6 may be satisfied in the composition formula (1).

The vanadium oxide according to the seventh aspect is more suitable for improving a battery capacity.

According to an eighth aspect of the present disclosure, for example, in the vanadium oxide according to the seventh aspect, 0.14≤α≤0.57 may be satisfied in the composition formula (1).

The vanadium oxide according to the eighth aspect is more suitable for improving a battery capacity.

A battery according to a ninth aspect of the present disclosure includes:
a positive electrode;
a negative electrode; and
an electrolyte layer disposed between the positive electrode and the negative electrode, in which
the negative electrode includes the vanadium oxide according to any one of the first to the eighth aspects.

The battery according to the ninth aspect has excellent charge and discharge characteristics.

According to a tenth aspect of the present disclosure, for example, in the battery according to the ninth aspect, the negative electrode may further include a conductive additive.

The battery according to the tenth aspect allows improvement of the electronic conductivity of the negative electrode. Therefore, the battery according to the tenth aspect has more excellent charge and discharge characteristics.

Embodiments of the present disclosure will be described below with reference to the drawings. The present disclosure is not limited to the following embodiments.

### (First embodiment)

A vanadium oxide according to a first embodiment is represented by a composition formula (1): Li_{3+x+α}V₁₋ₓMₓO_{4+α/2}. In the composition formula (1), 0.03<α<1.0 and 0≤x<1.0 are satisfied, and M is at least one selected from the group consisting of tetravalent metal elements.

The vanadium oxide according to the first embodiment can be used as a battery material. The vanadium oxide according to the first embodiment can be used as, for example, a negative electrode active material. The vanadium oxide according to the first embodiment can be used for, for example, obtaining a battery having excellent charge and discharge characteristics. The vanadium oxide according to the first embodiment is suitable for, for example, improving a battery capacity. Examples of the battery include an all-solid-state battery. The all-solid-state battery may be a primary battery or a secondary battery.

By satisfying 0.03<α<1.0 in the composition formula (1), for example, a capacity of the battery in which the vanadium oxide according to the first embodiment is used, is improved. This is because intercalation of Li into and deintercalation of Li from the vanadium oxide according to the first embodiment are facilitated.

Li and O in amounts represented by α in the composition formula (1) may be taken into particles of the vanadium oxide, or may exist outside the particles as a second phase different from a first phase of the particles. It should be noted that each of the vanadium oxides disclosed in Patent Literatures 1 and 2 does not contain Li and O by amounts corresponding to the amounts represented by α.

In the composition formula (1), 0.04≤α≤0.95 may be satisfied. In this configuration, the vanadium oxide according to the first embodiment can improve a battery capacity.

In the composition formula (1), 0.06≤α≤0.93 may be satisfied. In this configuration, the vanadium oxide according to the first embodiment can improve a battery capacity.

In the composition formula (1), 0.1≤α≤0.6 may be satisfied. In this configuration, the vanadium oxide according to the first embodiment can further improve a battery capacity.

In the composition formula (1), 0.14≤α≤0.57 may be satisfied. In this configuration, the vanadium oxide according to the first embodiment can further improve a battery capacity.

The upper limit value and the lower limit value of the range of α in the composition formula (1) may be defined by any combination selected from values that are a value greater than 0.03 (that is, 0.03<α), 0.04, 0.06, 0.1, 0.14, 0.24, 0.25, 0.32, 0.57, 0.6, 0.93, 0.95, and a value less than 1.0 (that is, α<1.0).

In the composition formula (1), 0<x<1.0 may be satisfied. In this configuration, the vanadium oxide according to the first embodiment can improve a battery capacity.

In the composition formula (1), 0<x≤0.1 may be satisfied. In this configuration, the vanadium oxide according to the first embodiment can further improve a battery capacity.

The upper limit value and the lower limit value of the range of x in the composition formula (1) may be defined by any combination selected from values that are a value greater than 0 (that is, 0<x), 0.05, 0.1, and a value less than 1.0 (that is, x<1.0).

In a case where x is within the above-described range in the composition formula (1), Li is more easily intercalated into and deintercalated from the vanadium oxide according to the first embodiment. Therefore, as described above, the vanadium oxide according to the first embodiment can improve a battery capacity.

As described above, M represents at least one selected from tetravalent metal elements. Examples of the tetravalent metal elements include Ti, Zr, Si, Ge, and Sn.

In the composition formula (1), M may include Ti. In this configuration, the vanadium oxide according to the first embodiment can improve a battery capacity. M may be Ti.

The shape of the vanadium oxide according to the first embodiment is not limited. The shape is, for example, acicular, spherical, or ellipsoidal. The vanadium oxide according to the first embodiment may be in particle form. The vanadium oxide according to the first embodiment may be formed in the shape of a pellet or a plate.

In a case where the shape of the vanadium oxide according to the first embodiment is in particle form (e.g. spherical), the particles of the vanadium oxide may have a median diameter of 0.1 µm or more and 100 µm or less, or a median diameter of 0.5 µm or more and 10 µm or less. Thus, the vanadium oxide according to the first embodiment and another material can be favorably dispersed. Examples of the other material include a solid electrolyte.

The median diameter of particles means the particle diameter (d50) corresponding to 50% of a cumulative volume in volumetric particle size distribution. The volumetric particle size distribution can be measured by a laser diffraction measurement device or an image analysis device.

### <Method for manufacturing vanadium oxide>

The vanadium oxide according to the first embodiment can be manufactured by the following method.

Raw material powders are prepared so as to obtain a target composition. Examples of the raw material powders include an oxide, a hydroxide, a carbonate, a nitrate, and an organic salt.

In an example, it is assumed that M is Ti and x is 0.05 at the time of mixing the raw materials, in the vanadium oxide represented by the composition formula (1): Li_{3+x+α}V₁₋ₓMₓO_{4+α/2}. Firstly, the raw material powders are prepared by setting α as 0. For example, Li₂CO₃, V₂O₅, and TiO₂ are prepared at a molar ratio of Li₂CO₃:V₂O₅:TiO₂=(3.05/2):(0.95/2):0.05. To the raw material powders prepared at such a molar ratio, a substance as a Li source, for example, Li₂CO₃ is further added in consideration of the value of α in the target composition, and the raw material powders are mixed. An amount of the Li source to be mixed in excess can be determined as appropriate in accordance with, for example, the value α in the target composition and a substance used as the Li source. In an example, in order to manufacture the vanadium oxide in which 0.03<α<1.0 is satisfied, the Li source may be used in excess by, for example, a range from 0.5 mass % to 40 mass % or a range from 1 mass % to 30 mass % with respect to the amount of the Li source for which the molar ratio is determined by setting α as 0.

Instead of Li₂CO₃, lithium hydroxide or a hydrate thereof may be used.

A reaction product is obtained by firing a mixture of the raw material powders. The firing may be performed in an atmospheric air or an inert gas atmosphere. The inert atmosphere is, for example, an argon atmosphere or a nitrogen atmosphere.

Alternatively, the reaction product may be obtained by causing the raw material powders of the mixture to mechanochemically react with each other in a mixer such as a planetary ball mill (by a mechanochemical milling method).

The vanadium oxide according to the first embodiment is obtained by such methods.

The molar ratio at the time of mixing the raw materials and the molar ratio of the reaction product are not necessarily equal to each other. This is because a raw material may not be taken into the reaction product due to evaporation or the like during the reaction.

The composition of the vanadium oxide, for example, the value of x and the value of α in the composition formula (1) can be determined by, for example, high-frequency inductively-coupled plasma (ICP) emission spectrometry, atomic absorption spectrometry, or an EPMA (electron probe micro analyzer) method. The value of x in the composition formula (1) can be determined from an amount of the element M in the vanadium oxide. The value of α in the composition formula (1) can be determined from an amount of Li and an amount of the element M in the vanadium oxide.

### (Second embodiment)

A second embodiment will be described below. The matters described in the first embodiment are omitted as appropriate.

A battery according to the second embodiment includes a positive electrode, an electrolyte layer, and a negative electrode. The electrolyte layer is disposed between the positive electrode and the negative electrode. The negative electrode includes the vanadium oxide according to the first embodiment.

The battery according to the second embodiment has excellent charge and discharge characteristics.

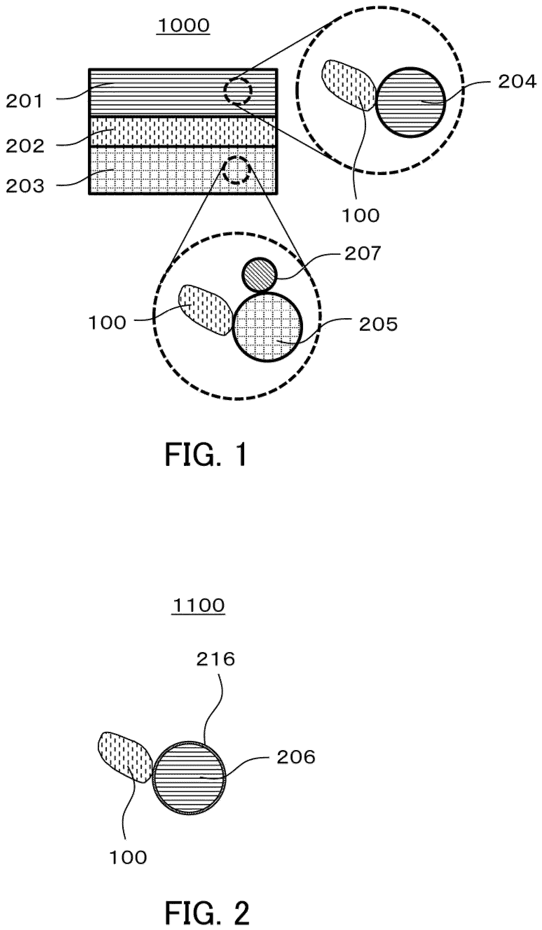

FIG. 1 illustrates a cross-sectional view of a battery 1000 according to the second embodiment.

The battery 1000 includes a positive electrode 201, an electrolyte layer 202, and a negative electrode 203. The electrolyte layer 202 is disposed between the positive electrode 201 and the negative electrode 203.

The positive electrode 201 includes positive electrode active material particles 204 and solid electrolyte particles 100.

The electrolyte layer 202 includes an electrolyte material. The electrolyte material is, for example, a solid electrolyte material.

The negative electrode 203 includes negative electrode active material particles 205 and the solid electrolyte particles 100.

The negative electrode active material particles 205 are particles including the vanadium oxide according to the first embodiment. The negative electrode active material particles 205 may be particles including the vanadium oxide according to the first embodiment as a main component. The particles including the vanadium oxide according to the first embodiment as a main component refer to particles in which the component included in the largest amount in mass ratio is the vanadium oxide according to the first embodiment. The negative electrode active material particles 205 may be particles formed of the vanadium oxide according to the first embodiment.

The negative electrode active material particles 205 may have a median diameter of 0.1 µm or more and 100 µm or less. In a case where the negative electrode active material particles 205 have a median diameter of 0.1 µm or more, the negative electrode active material particles 205 and the solid electrolyte particles 100 can be favorably dispersed in the negative electrode 203. This improves the charge and discharge characteristics of the battery. In a case where the negative electrode active material particles 205 have a median diameter of 100 µm or less, the diffusion rate of lithium in the negative electrode active material particles 205 improves. This allows the battery 1000 to operate at a high power.

The negative electrode active material particles 205 may have a median diameter larger than that of the solid electrolyte particles 100. This allows favorable dispersion of the negative electrode active material particles 205 and the solid electrolyte particles 100.

In order to increase an energy density and power output of the battery 1000, a ratio of the volume of the negative electrode active material particles 205 to the sum of the volume of the negative electrode active material particles 205 and the volume of the solid electrolyte particles 100 may be 0.30 or more and 0.95 or less, in the negative electrode 203.

In order to increase an energy density and power output of the battery 1000, the negative electrode 203 may have a thickness of 10 µm or more and 500 µm or less.

The solid electrolyte particles 100 included in the negative electrode 203 may be a sulfide solid electrolyte, a halide solid electrolyte, an oxide solid electrolyte, or a polymer solid electrolyte.

In the present disclosure, the term "sulfide solid electrolyte" means a solid electrolyte containing sulfur. The term "oxide solid electrolyte" means a solid electrolyte containing oxygen. The oxide solid electrolyte may contain an anion other than oxygen (excluding sulfur anions and halogen anions). The term "halide solid electrolyte" means a solid electrolyte containing a halogen element and being free of sulfur. The halide solid electrolyte may contain not only a halogen element but also oxygen.

Examples of the sulfide solid electrolyte include Li₂S-P₂S₅, Li₂S-SiS₂, Li₂S-B₂S₃, Li₂S-GeS₂, Li_{3.25}Ge_{0.25}P_{0.75}S₄, and Li₁₀GeP₂S₁₂.

Examples of the halide solid electrolyte include compounds represented by LiₐMe_{b}Y_{c}X₆ in which the mathematical formula: a+mb+3c=6 and c>0 are satisfied. Me is at least one selected from the group consisting of metal elements other than Li and Y and metalloid elements. X is at least one element selected from the group consisting of F, Cl, Br, and I. The value of m represents the valence of Me.

The "metalloid elements" are B, Si, Ge, As, Sb, and Te. The "metal elements" are all the elements (excluding H) included in Groups 1 to 12 of the periodic table, and all the elements (excluding B, Si, Ge, As, Sb, Te, C, N, P, O, S, and Se) included in Groups 13 to 16 of the periodic table.

In order to increase ionic conductivity of the halide solid electrolyte, Me may be at least one element selected from the group consisting of Mg, Ca, Sr, Ba, Zn, Sc, Al, Ga, Bi, Zr, Hf, Ti, Sn, Ta, and Nb.

Other examples of the halide solid electrolyte include compounds represented by Li_{α'}Me'_{β}O_{γ}X_{δ}. The values of α', β, γ, and δ are each greater than 0, Me' is at least one element selected from the group consisting of metal elements other than Li and metalloid elements, X is at least one element selected from the group consisting of Cl, Br, and I, and the mathematical formulas: 0.9≤α'≤1.2, β=1.0, 1.0≤γ≤1.3, and 3.6≤δ≤4.0 are satisfied.

Examples of the oxide solid electrolyte include:
(i) a NASICON solid electrolyte such as LiTi₂(PO₄)₃ and element-substituted substances thereof;
(ii) a perovskite solid electrolyte such as (LaLi)TiO₃;
(iii) a LISICON solid electrolyte such as Li₁₄ZnGe₄O₁₆, Li₄SiO₄, LiGeO₄, and element-substituted substances thereof;
(iv) a garnet solid electrolyte such as Li₇La₃Zr₂O₁₂ and element-substituted substances thereof; and
(v) Li₃PO₄ and N-substituted substances thereof.

Examples of the polymer solid electrolyte include a compound of a polymer compound and a lithium salt. The polymer compound may have an ethylene oxide structure. The polymer compound having an ethylene oxide structure can contain a large amount of lithium salt, and thus has higher ionic conductivity. The polymer solid electrolyte may be, for example, a composite compound of polyethylene oxide and lithium salt. Such a polymer solid electrolyte is, for example, lithium bis(trifluoromethanesulfonyl)imide.

Examples of the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One lithium salt selected from these may be used alone. Alternatively, a mixture of two or more lithium salts selected from these may be used.

The positive electrode 201 incudes a material capable of occluding and releasing metal ions such as lithium ions. The positive electrode 201 includes, for example, a positive electrode active material (for example, positive electrode active material particles 204).

Examples of the positive electrode active material include a lithium-containing transition metal oxide, a transition metal fluoride, a polyanion material, a fluorinated polyanion material, a transition metal sulfide, a transition metal oxysulfide, and a transition metal oxynitride. Examples of the lithium-containing transition metal oxide include Li(Ni, Co, Al)O₂, Li(Ni, Co, Mn)O₂, and LiCoO₂.

In the present disclosure, the expression "(A, B, C)" represents "at least one selected from the group consisting of A, B, and C".

Lithium phosphate may be used as the positive electrode active material from the viewpoint of cost and safety of the battery 1000.

The positive electrode active material particles 204 may have a median diameter of 0.1 µm or more and 100 µm or less. In a case where the positive electrode active material particles 204 have a median diameter of 0.1 µm or more, the positive electrode active material particles 204 and the solid electrolyte particles 100 can be favorably dispersed in the positive electrode 201. This improves the charge and discharge characteristics of the battery. In a case where the positive electrode active material particles 204 have a median diameter of 100 µm or less, the diffusion rate of lithium in the positive electrode active material particles 204 improves. This allows the battery 1000 to operate at a high power.

The positive electrode active material particles 204 may have a median diameter larger than that of the solid electrolyte particles 100. This allows favorable dispersion of the positive electrode active material particles 204 and the solid electrolyte particles 100.

In order to increase an energy density and power output of the battery 1000, a ratio of the volume of the positive electrode active material particles 204 to the sum of the volume of the positive electrode active material particles 204 and the volume of the solid electrolyte particles 100 may be 0.30 or more and 0.95 or less in the positive electrode 201.

For example, the electrode material 1100 is included in the positive electrode 201. A coating layer 216 may be formed on the surface of an electrode active material particle 206 in order to prevent the electrode active material particle 206 from reacting with the solid electrolyte particle 100. This can inhibit increase of reaction overvoltage of the battery. Examples of a coating material included in the coating layer 216 include a sulfide solid electrolyte, an oxide solid electrolyte, a polymer solid electrolyte, and a halide solid electrolyte.

The coating material may be a halide solid electrolyte material or an oxide solid electrolyte material. The halide solid electrolyte material may include F. This improves stability of the coating material at a high potential. Therefore, the battery 1000 has high charge and discharge efficiency. The oxide solid electrolyte may be lithium niobate or a polyanion material which has excellent stability also at a high potential. Thus, the battery 1000 has high charge and discharge efficiency.

In order to increase an energy density and power output of the battery 1000, the positive electrode 201 may have a thickness of 10 µm or more and 500 µm or less.

The solid electrolyte particles 100 included in the positive electrode 201 may be a sulfide solid electrolyte, a halide solid electrolyte, an oxide solid electrolyte, a polymer solid electrolyte, or an organic polymer solid electrolyte.

The electrolyte layer 202 includes an electrolyte material. The electrolyte material is, for example, a solid electrolyte material. The electrolyte layer 202 may be a solid electrolyte layer. The solid electrolyte material included in the electrolyte layer 202 may be a sulfide solid electrolyte, a halide solid electrolyte, or a polymer solid electrolyte.

The electrolyte layer 202 may have a thickness of 1 µm or more and 100 µm or less. In a case where the electrolyte layer 202 has a thickness of 1 µm or more, short-circuiting between the positive electrode 201 and the negative electrode 203 is unlikely to occur. In a case where the electrolyte layer 202 has a thickness of 100 µm or less, the battery 1000 can operate at a high power.

In order to facilitate transfer of lithium ions and improve the output characteristics of the battery, at least one selected from the group consisting of the positive electrode 201, the electrolyte layer 202, and the negative electrode 203 may include a nonaqueous electrolyte solution, a gel electrolyte, or an ionic liquid.

The nonaqueous electrolyte solution contains a nonaqueous solvent and a lithium salt dissolved in the nonaqueous solvent. Examples of the nonaqueous solvent include a cyclic carbonate solvent, a linear carbonate solvent, a cyclic ether solvent, a linear ether solvent, a cyclic ester solvent, a linear ester solvent, and a fluorinated solvent.
Examples of the cyclic carbonate solvent include ethylene carbonate, propylene carbonate, and butylene carbonate. Examples of the linear carbonate solvent include dimethyl carbonate, ethyl methyl carbonate, and diethyl carbonate. Examples of the cyclic ether solvent include tetrahydrofuran, 1,4-dioxane, and 1,3-dioxolane. Examples of the linear ether solvent include 1,2-dimethoxyethane and 1,2-diethoxyethane. Examples of the cyclic ester solvent include γ-butyrolactone. Examples of the linear ester solvent include methyl acetate. Examples of the fluorinated solvent include fluoroethylene carbonate, methyl fluoropropionate, fluorobenzene, fluoroethyl methyl carbonate, and fluorodimethylene carbonate. One nonaqueous solvent selected from these may be used alone. Alternatively, a mixture of two or more nonaqueous solvents selected from these may be used.

Examples of the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One lithium salt selected from these may be used alone. Alternatively, a mixture of two or more lithium salts selected from these may be used. The concentration of the lithium salt is, for example, 0.5 mol/liter or more and 2 mol/liter or less.

As the gel electrolyte, a polymer material impregnated with a nonaqueous electrolyte solution can be used. Examples of the polymer material include polyethylene oxide, polyacrylonitrile, polyvinylidene fluoride, polymethyl methacrylate, and a polymer having an ethylene oxide bond.

Examples of cations contained in the ionic liquid include:
(i) aliphatic linear quaternary salts such as tetraalkylammoniums and tetraalkylphosphoniums;
(ii) aliphatic cyclic ammoniums such as pyrrolidiniums, morpholiniums, imidazoliniums, tetrahydropyrimidiniums, piperaziniums, and piperidiniums; and
(iii) nitrogen-containing heterocyclic aromatic cations such as pyridiniums and imidazoliums.

Examples of anions contained in the ionic liquid include PF₆⁻, BF₄⁻, SbF₆⁻, AsF₆⁻, SO₃CF₃⁻, N(SO₂CF₃)₂⁻, N(SO₂C₂F₅)₂⁻, N(SO₂CF₃)(SO₂C₄F₉)⁻, and C(SO₂CF₃)₃⁻.

The ionic liquid may contain a lithium salt.

In order to increase the adhesion between particles, at least one selected from the group consisting of the positive electrode 201, the electrolyte layer 202, and the negative electrode 203 may contain a binder.

Examples of the binder include polyvinylidene fluoride, polytetrafluoroethylene, polyethylene, polypropylene, aramid resin, polyamide, polyimide, polyamide-imide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyethersulfone, hexafluoropolypropylene, styrenebutadiene rubber, and carboxymethylcellulose. A copolymer may also be used as the binder. Examples of such a binder include a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. A mixture of two or more materials selected from the above-described materials may be used as the binder.

At least one selected from the positive electrode 201 and the negative electrode 203 may include a conductive additive in order to increase electronic conductivity.

Examples of the conductive additive include:
(i) graphites such as natural graphite and artificial graphite;
(ii) carbon blacks such as acetylene black and ketjen black;
(iii) conductive fibers such as a carbon fiber and metal fiber;
(iv) fluorinated carbon;
(v) metal powders such as aluminum powder;
(vi) conductive whiskers such as a zinc oxide whisker and a potassium titanate whisker;
(vii) conductive metal oxides such as titanium oxide; and
(viii) conductive polymer compounds such as polyaniline compound, polypyrrole compound, and polythiophene compound.

In order to reduce the cost, the conductive additive of the above-described (i) or (ii) may be used.

The negative electrode 203 may include a conductive additive 207 as well as the negative electrode active material particles 205. Examples of the material of the conductive additive 207 are as described above.

At least a part of the surfaces of the negative electrode active material particles 205 may be coated with the conductive additive 207. This increases an area in which the conductive additive 207 and the negative electrode active material particles 205 are in contact with each other. As a result, the battery resistance is reduced and power output can be increased.

A ratio of the volume of the conductive additive 207 to the sum of the volume of the negative electrode active material particles 205 and the volume of the conductive additive 207 may be 0.01 or more and 0.4 or less, in the negative electrode 203.

FIG. 2 illustrates a cross-sectional view of the electrode material 1100 according to the second embodiment. The electrode material 1100 illustrated in FIG. 2 may be included in the negative electrode 203. The coating layer 216 may be formed on the surface of the electrode active material particle 206 in order to prevent the solid electrolyte particle 100 from reacting with the negative electrode active material (that is, the electrode active material particle 206). This allows the battery to have high charge and discharge efficiency. Therefore, the vanadium oxide according to the first embodiment which is included in the negative electrode 203 may be coated with the coating material.

Examples of the coating material included in the coating layer 216 include a sulfide solid electrolyte, an oxide solid electrolyte, a polymer solid electrolyte, and a halide solid electrolyte.

Examples of the sulfide solid electrolyte include Li₂S-P₂S₅. Examples of the oxide solid electrolyte include trilithium phosphate. Examples of the polymer solid electrolyte include a composite compound of polyethylene oxide and lithium salt. Examples of such a polymer solid electrolyte include lithium bis(trifluoromethanesulfonyl)imide.

Examples of the shape of the battery according to the second embodiment include coin type, cylindrical type, prismatic type, sheet type, button type, flat type, and stack type shapes.

The battery according to the second embodiment may be, for example, manufactured by preparing a material for forming a positive electrode, a material for forming an electrolyte layer, and a material for forming a negative electrode, and producing, by a known method, a stack in which the positive electrode, the electrolyte layer, and the negative electrode are disposed in this order.

### EXAMPLES

The present disclosure will be described below in more detail by way of examples and a comparative example. The vanadium oxide of the examples can be represented by the composition formula (1): Li_{3+x+α}V₁₋ₓMₓO_{4+α/2}.

### (Example 1)

### [Production of vanadium oxide]

Li₂CO₃ (manufacture by Kojundo Chemical Laboratory Co., Ltd., purity of 99.9%), V₂O₅ (manufactured by Kojundo Chemical Laboratory Co., Ltd., purity of 99.9%), and TiO₂ (manufactured by Kojundo Chemical Laboratory Co., Ltd., purity of 99.9%) were prepared as raw material powders at a molar ratio of Li₂CO₃:V₂O₅:TiO₂=1.525:0.475:0.05. Li₂CO₃ was prepared in excess by 1 mass % with respect to the composition. That is, Li₂CO₃ was prepared in excess by 1 mass % with respect to the mass of Li₂CO₃ for which the molar ratio was determined as described above. The raw material powders were mixed in a mortar to obtain mixed powder. The obtained mixed powder was provisionally fired in air at 600°C for three hours. The provisionally fired powder having been obtained was subjected to main firing in air at 920°C for 15 hours. In both the provisional-firing and the main-firing, the temperature increase rate was 10°C per minute, and the temperature decrease rate was 5°C per minute. Thus, a vanadium oxide of Example 1 was obtained.

In the vanadium oxide of Example 1, x was 0.05, and α was 0.06 in the composition formula (1).

x was determined by analyzing an amount of Ti by an ICP emission spectrometer (PS3520VDDII manufactured by Hitachi High-Tech Science Corporation). α was determined by analyzing an amount of Li by an atomic absorption spectrophotometer (Z-2300 manufactured by Hitachi High-Technologies Corporation) and using the results of the analysis and an amount of Ti (that is, value of x).

### [Production of battery]

In an argon atmosphere with a dew point of -60°C or lower, the vanadium oxide of Example 1 and a solid electrolyte Li₃PS₄ were prepared at a volume ratio of 60:40. These materials were mixed in an agate mortar. Thus, a negative electrode mixture was obtained.

In an insulating cylinder having an inner diameter of 9.5 mm, a solid electrolyte Li₃PS₄ (80 mg) and the negative electrode mixture (6.5 mg) were stacked to obtain a stack. A pressure of 360 MPa was applied to the stack, and a solid electrolyte layer and a negative electrode were formed. The solid electrolyte layer had a thickness of 500 µm.

Next, Li (thickness: 300 µm) was stacked on the solid electrolyte layer. A pressure of 80 MPa was applied to the stack, and a positive electrode was formed.

Next, current collectors formed of stainless steel were attached to the positive electrode and the negative electrode, and current collector leads were attached to the current collectors.

Finally, an insulating ferrule was used to isolate the interior of the insulating cylinder from the outside air atmosphere, thereby sealing the interior of the cylinder.

The battery of Example 1 was obtained as described above. The battery of Example 1 was a monopolar test cell in which the negative electrode was used as a working electrode and the positive electrode was used as a counter electrode, and was used for testing the performance of the negative electrode. Specifically, the negative electrode to be tested was used for the working electrode, and a sufficient amount of an appropriate active material for reaction of the working electrode was used for the counter electrode. The test cell was for testing the performance of the negative electrode. Therefore, metal Li was used as the counter electrode. The negative electrode which was tested for the performance by using such a test cell can be used for, for example, a secondary battery in combination with a positive electrode including the positive electrode active material described above in the embodiments, such as a Li-containing transition metal oxide or the like.

### [Charge and discharge test]

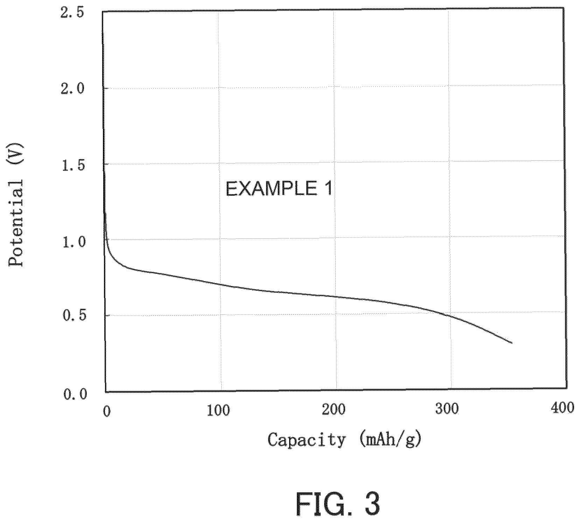

FIG. 3 shows a graph representing initial discharge characteristics of the battery of Example 1. The horizontal axis represents discharge capacity. The vertical axis represents voltage. The measurement result shown in FIG. 3 was obtained by the following method.

The following charge and discharge test was performed by using the battery of Example 1. As described above, the battery produced in Example 1 was a monopolar test cell, and corresponded to a negative electrode half cell. Therefore, in Example 1, a direction in which the potential of the half cell decreased by intercalation of Li ions into the negative electrode was referred to as charging and the direction in which the potential increased was referred to as discharging. That is, the charging in Example 1 was substantially discharging (that is, in the case of a full cell), and the discharging in Example 1 was substantially charging.

The battery of Example 1 was disposed in a thermostatic chamber maintained at 25°C.

The battery of Example 1 was charged until the voltage reached 0.3 V at a current value of 0.1 C rate (10-hour rate) with respect to the theoretical capacity of the battery. Next, the battery of Example 1 was discharged until the voltage reached 2.5 V at a current value of 0.05 C rate.

As a result of the charge and discharge test, the battery of Example 1 had an initial discharge capacity of 354 mAh/g.

### (Examples 2 to 7 and Comparative example 1)

### [Production of vanadium oxide]

In Example 2, Li₂CO₃ was prepared in excess by 5 mass %. Except for this, a vanadium oxide of Example 2 was produced in the same method as in Example 1. The values of x and α in the composition formula (1) were obtained in the same method as in Example 1. In Example 2, x was 0.05 and α was 0.14.

In Example 3, Li₂CO₃ was prepared in excess by 10 mass %. Except for this, a vanadium oxide of Example 3 was produced I in the same method as in Example 1. The values of x and α in the composition formula (1) were obtained in the same method as in Example 1. In Example 3, x was 0.05 and α was 0.24.

In Example 4, Li₂CO₃ was prepared in excess by 15 mass %. Except for this, a vanadium oxide of Example 4 was produced in the same method as in Example 1. The values of x and α in the composition formula (1) were obtained in the same method as in Example 1. In Example 4, x was 0.05 and α was 0.57.

In Example 5, Li₂CO₃ was prepared in excess by 30 mass %. Except for this, a vanadium oxide of Example 5 was produced in the same method as in Example 1. The values of x and α in the composition formula (1) were obtained in the same method as in Example 1. In Example 5, x was 0.05 and α was 0.93.

In Example 6, Li₂CO₃ and V₂O₅ were prepared at a molar ratio of Li₂CO₃:V₂O₅=1.5:0.5. Li₂CO₃ was prepared in excess by 10 mass %. Except for these, a vanadium oxide of Example 6 was produced in the same method as in Example 1. The values of x and α in the composition formula (1) were obtained in the same method as in Example 1. In Example 6, x was 0 and α was 0.25.

In Example 7, Li₂CO₃, V₂O₅, and TiO₂ were prepared at a molar ratio of Li₂CO₃:V₂O₅:TiO₂=1.55:0.45:0.1. Li₂CO₃ was prepared in excess by 10 mass %. Except for these, a vanadium oxide of Example 7 was produced in the same method as in Example 1. The values of x and α in the composition formula (1) were obtained in the same method as in Example 1. In Example 7, x was 0.1 and α was 0.32.

In Comparative example 1, an excess amount of Li₂CO₃ was not added. Except for this, a vanadium oxide of Comparative example 1 was produced in the same method as in Example 1. The values of x and α in the composition formula (1) were obtained in the same method as in Example 1. In Comparative example 1, x was 0.05 and α was 0.03.

### [Charge and discharge test]

Batteries were produced by using the vanadium oxides of Examples 2 to 8 and Comparative example 1 for negative electrodes, in the same manner as in Example 1, and the initial discharge capacities were measured in the same manner as in Example 1. Table 1 indicates the measurement results.

**[Table 1]**

| | Li_{3+x+α}V₁₋ₓMₓO_{4+α/2} | | | Discharge capacity (mAh/g) |
|---|---|---|---|---|
| | M | x | α | |
| Example 1 | Ti | 0.05 | 0.06 | 354 |
| Example 2 | Ti | 0.05 | 0.14 | 385 |
| Example 3 | Ti | 0.05 | 0.24 | 382 |
| Example 4 | Ti | 0.05 | 0.57 | 374 |
| Example 5 | Ti | 0.05 | 0.93 | 297 |
| Example 6 | Ti | 0 | 0.25 | 280 |
| Example 7 | Ti | 0.1 | 0.32 | 331 |
| Comparative example 1 | Ti | 0.05 | 0.03 | 270 |

### (Discussion)

As is clear from Table 1, the battery in which the vanadium oxide represented by the composition formula (1) was used for the active material had high discharge capacity.

As is clear from comparison between Comparative example 1 and Examples 1 to 5, in a case where α was greater than 0.03, high discharge capacity was able to be achieved.

As is clear from comparison between Comparative example 1 and Examples 1 to 7, in a case where α was greater than 0.03 even when x was not 0.05, high discharge capacity was able to be achieved. That is, in a case where α was greater than 0.03 even when x was 0, high discharge capacity was able to be achieved.

Also in a case where at least one selected from the group consisting of other tetravalent metal elements instead of Ti is used as M, the same effect can be expected. This is because an element having a valence of 4 which is equal to the valence of Ti has properties similar to those of Ti.

As described above, the vanadium oxide according to the present disclosure is suitable for providing a battery having excellent charge and discharge characteristics.

### INDUSTRIAL APPLICABILITY

The vanadium oxide of the present disclosure is used as a battery material, for example, a material of an all-solid-state lithium ion secondary battery.

## Claims

1. A vanadium oxide represented by a composition formula (1): Li_{3+x+α}V₁₋ₓMₓO_{4+α/2}, wherein,
in the composition formula (1),
0.03<α<1.0 and 0≤x<1.0 are satisfied, and
M is at least one selected from the group consisting of tetravalent metal elements.

2. The vanadium oxide according to claim 1, wherein 0<x<1.0 is satisfied in the composition formula (1).

3. The vanadium oxide according to claim 2, wherein 0<x≤0.1 is satisfied in the composition formula (1).

4. The vanadium oxide according to claim 1, wherein M includes Ti in the composition formula (1).

5. The vanadium oxide according to claim 1, wherein 0.04≤α≤0.95 is satisfied in the composition formula (1).

6. The vanadium oxide according to claim 5, wherein 0.06≤α≤0.93 is satisfied in the composition formula (1).

7. The vanadium oxide according to claim 6, wherein 0.1≤α≤0.6 is satisfied in the composition formula (1).

8. The vanadium oxide according to claim 7, wherein 0.14≤α≤0.57 is satisfied in the composition formula (1).

9. A battery comprising:
a positive electrode;
a negative electrode; and
an electrolyte layer disposed between the positive electrode and the negative electrode, wherein
the negative electrode includes the vanadium oxide according to any one of claims 1 to 8.

10. The battery according to claim 9, wherein the negative electrode further includes a conductive additive.
